# EUROPEAN PATENT APPLICATION

(11) **EP 4 752 822 A1**
(43) Date of publication of application: **03.06.2026**
(21) Application number: 24844770.8
(22) Date of filing: 22.07.2024
(51) Int. Cl.: G06T 1/20

(54) **IMAGE PROCESSING SYSTEM AND METHOD, ELECTRONIC DEVICE, READABLE STORAGE MEDIUM, AND CHIP**

(30) Priority: 27.07.2023 CN 202310938352
(71) Applicant: Vivo Mobile Communication Co., Ltd., Dongguan, Guangdong 523863 (CN)
(72) Inventor: ZENG, Dabin, Dongguan, Guangdong 523863 (CN)
(74) Representative: Lavoix
(86) International application number: PCT/CN2024/106853
(87) International publication number: WO 2025/021079

(57) **Abstract**

This application provides an image processing system and method, an electronic device, a readable storage medium, and a chip. The image processing system includes: an image processing chip and a hardware abstraction layer, where the image processing chip is communicatively connected to the hardware abstraction layer; and a manufacturer framework layer and an application framework layer, where the manufacturer framework layer is separately communicatively connected to the hardware abstraction layer and the application framework layer, the manufacturer framework layer is further communicatively connected to the image processing chip, and the manufacturer framework layer is configured to perform communication control on the image processing chip.

## Description

This application claims priority to Chinese Patent Application No. 202310938352.0, filed with the China National Intellectual Property Administration on July 27, 2023 and entitled "IMAGE PROCESSING SYSTEM AND METHOD, ELECTRONIC DEVICE, READABLE STORAGE MEDIUM, AND CHIP", which is incorporated herein by reference in its entirety.

### TECHNICAL FIELD

This application relates to the field of image processing, and in particular, to an image processing system and method, an electronic device, a readable storage medium, and a chip.

### BACKGROUND

With the development of communication technologies, functions in electronic devices are increasingly powerful. For example, a user may use an electronic device to shoot an image. However, in a process of photographing by using an existing electronic device, quality of a photographed image depends on an external photographing environment to some extent. When there are relatively many interference factors that affect photographing, a photographed image is generally unsatisfactory.

To improve photographing quality of the electronic device, it is proposed in a related technology to dispose an image processing chip in the electronic device. In the related technology, a control layer of the image processing chip is generally disposed in a camera hardware abstraction layer of a system on chip (System on Chip, SoC), so that the SoC invokes the image processing chip to perform image processing. When the image processing chip is applied to the electronic device, interaction logic code generally needs to be written, so that normal interaction between the SoC and the image processing chip can be performed. However, when a same image processing chip needs to be applied to SoCs provided by different platforms, camera hardware abstraction layers in the same image processing chip are generally different from each other due to different types of SoCs. Consequently, use experience of the user in using different electronic device models differs significantly.

### SUMMARY

This application provides an image processing system and method, an electronic device, a readable storage medium, and a chip, to resolve a problem that use experience of using different electronic device models differs significantly.

According to a first aspect, an embodiment of this application provides an image processing system, and the system includes:
an image processing chip and a hardware abstraction layer, where the image processing chip is communicatively connected to the hardware abstraction layer; and
a manufacturer framework layer and an application framework layer, where the manufacturer framework layer is separately communicatively connected to the hardware abstraction layer and the application framework layer; and
the manufacturer framework layer is further communicatively connected to the image processing chip, and the manufacturer framework layer is configured to perform communication control on the image processing chip.

According to a second aspect, an embodiment of this application provides an image processing method, applied to the image processing system according to the first aspect, where the method includes:
when a manufacturer framework layer receives a first image data stream output by a camera hardware abstraction module, controlling the manufacturer framework layer to transmit the first image data stream to the image processing chip;
controlling the image processing chip to perform image processing on the first image data stream to obtain a second image data stream; and
controlling the image processing chip to transmit the second image data stream to the manufacturer framework layer.

According to a third aspect, an embodiment of this application provides an electronic device. The electronic device includes a processor and a memory, the memory stores a program or instructions capable of being run on the processor, and when the program or the instructions are executed by the processor, the steps of the image processing method according to the second aspect are implemented.

According to a fourth aspect, an embodiment of this application provides a readable storage medium. The readable storage medium stores a program or instructions, and when the program or the instructions are executed by a processor, the steps of the image processing method according to the second aspect are implemented.

According to a fifth aspect, an embodiment of this application provides a chip. The chip includes a processor and a communication interface, the communication interface is coupled to the processor, and the processor is configured to run a program or instructions, to implement the steps of the image processing method according to the second aspect.

The image processing system in the embodiments of this application includes an image processing chip, a hardware abstraction layer, a manufacturer framework layer, and an application framework layer. The image processing chip is communicatively connected to the hardware abstraction layer. The manufacturer framework layer is separately communicatively connected to the hardware abstraction layer and the application framework layer. The manufacturer framework layer is further communicatively connected to the image processing chip, and the manufacturer framework layer is configured to perform communication control on the image processing chip. Therefore, the manufacturer framework layer is added to an Android framework system, where the manufacturer framework layer is communicatively connected to the hardware abstraction layer and the application framework layer, so that some functional modules of the hardware abstraction layer can be moved up to the manufacturer framework layer, and therefore, the functional modules that are moved up can be independently invoked by the application framework layer, do not need to be bound to a camera hardware abstraction module, do not rely on development of the camera hardware abstraction module, and after decoupling, chip upgrade can be independently performed, and can be quickly adapted when a new platform is introduced. Therefore, a problem that use experience of using different electronic device models differs significantly can be resolved. Therefore, experience of using different electronic device models by a user is unified, instead of causing a memory occupation difference and a power consumption difference that are caused by a processing solution difference due to a platform difference.

### BRIEF DESCRIPTION OF DRAWINGS

FIG. 1 is a schematic structural diagram of an image processing system according to this application;
FIG. 2 is a schematic flowchart of an image processing method according to this application;
FIG. 3 is a schematic structural diagram of an electronic device according to an embodiment of this application; and
FIG. 4 is a schematic diagram of a hardware structure of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill based on the embodiments of this application shall fall within the protection scope of this application.

In the specification and claims of this application, the terms such as "first" and "second" are used for distinguishing similar objects, and are not necessarily used to describe a particular order or sequence. It should be understood that terms used in such a way are interchangeable in proper circumstances, so that embodiments of this application can be implemented in an order other than the order illustrated or described herein. Objects classified by "first", "second", and the like are usually of a same type, and a quantity of objects is not limited. For example, there may be one or more first objects. In addition, in this specification and the claims, "and/or" indicates at least one of connected objects, and a character "/" generally indicates an "or" relationship between associated objects.

An image processing system and method, an electronic device, a readable storage medium, and a chip provided in the embodiments of this application are described in detail below by using specific embodiments and application scenarios thereof with reference to the accompanying drawings.

For ease of understanding, an Android (Android) system framework structure related to the embodiments of this application is first described.

An application layer (Applications) includes all applications running on an Android device, including a pre-installed system application and a third-party application installed by a user.

An application framework layer (Application Framework) is the core of Android application development, and is an application programming interface (Application Programming Interface, API) framework that provides a basis for developing an application by a developer.

A system running library layer is class Libraries or Android Runtime (Android Runtime, ART). The class library Libraries is used by an upper layer by encapsulating a series of function libraries. The ART includes Java core libraries (Core Libraries) and an Android virtual machine (Dalvik).

A hardware abstraction layer (Hardware Abstraction Layer, HAL) is an interface layer located between an operating system kernel and a hardware circuit, and is used to abstract hardware.

A Linux kernel layer is the basis of the Android system, and mainly implements memory management, process scheduling, inter-process communication, device driving, and the like.

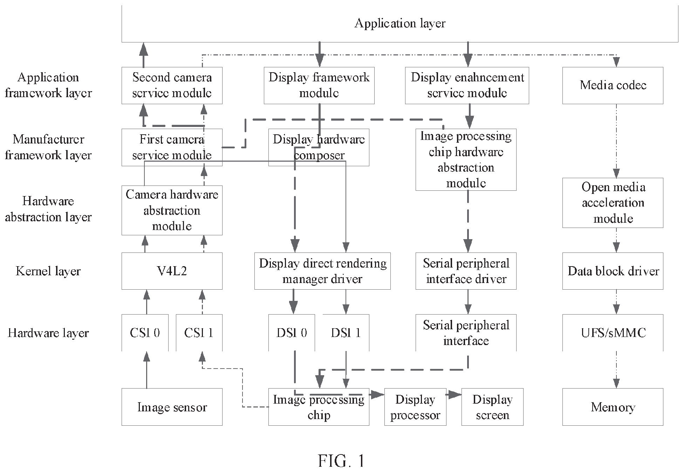

Referring to FIG. 1, FIG. 1 is a schematic structural diagram of an image processing system according to an embodiment of this application. The image processing system includes:
an image processing chip and a hardware abstraction layer, where the image processing chip is communicatively connected to the hardware abstraction layer; and
a manufacturer framework layer and an application framework layer, where the manufacturer framework layer is separately communicatively connected to the hardware abstraction layer and the application framework layer; and
the manufacturer framework layer is further communicatively connected to the image processing chip, and the manufacturer framework layer is configured to perform communication control on the image processing chip.

The image processing system may be an image processing system in an electronic device, and the electronic device may be user terminals of various types, such as a mobile phone or a tablet computer, or the electronic device may be a development device of a manufacturer.

The image processing system may further include an SoC in the electronic device. The image processing chip is a chip, other than the SoC, in the electronic device that is used to process an image. The image processing chip may also be referred to as an image enhancement chip or an external chip. Specifically, in a process in which the image processing system processes the image, based on processing the image based on the SoC, image enhancement processing may be further performed on an image output by the SoC, so as to improve an image processing effect. For example, the image processing chip may be configured to perform the following processing on the image: denoising processing, definition adjustment processing, white balance processing, and the like. The SoC may be configured to perform the following processing on the image: style processing, watermarking processing, denoising processing, and the like.

The hardware abstraction layer may include a camera hardware abstraction module, and the hardware abstraction layer may be specifically communicatively connected to the manufacturer framework layer by using the camera hardware abstraction module.

The camera hardware abstraction module is a standard module provided by Google. In a related technology, to control the image processing chip, an SoC of each platform generally stores control logic of the image processing chip in the camera hardware abstraction module. Because image processing logic of different platforms may be different, camera hardware abstraction modules in different platforms are different. In this embodiment of this application, a hardware abstraction layer in an SoC corresponding to each platform may communicate with the image processing chip based on the manufacturer framework layer, that is, control logic of a corresponding image processing chip does not need to be set in a camera hardware abstraction module in a hardware abstraction layer in the SoC corresponding to each platform, that is, the camera hardware abstraction module does not need to be modified in a development process, so that SoCs of various platforms have a same camera hardware abstraction module.

SoCs of various platforms have a same camera hardware abstraction module. Therefore, the SoCs of the platforms may use a same set of interaction code for interacting with the manufacturer framework layer. When the image processing chip is developed across platforms, logic interaction code between the image processing chip and a first camera service module only needs to be written once. In this way, camera hardware abstraction modules of different platforms may interact with the image processing chip by using the manufacturer framework layer, thereby avoiding a problem that a set of interaction logic needs to be written repeatedly. Therefore, a problem that use experience of using different electronic device models differs significantly is resolved. Therefore, experience of using different electronic device models by a user is unified, instead of causing a memory occupation difference and a power consumption difference that are caused by a processing solution difference due to a platform difference.

The manufacturer framework layer may also be referred to as an original equipment manufacturer (Original Equipment Manufacturer, OEM) framework layer, and the manufacturer framework layer is a functional module that is in the electronic device and that is independent of the SoC. The manufacturer framework layer may pre-store customized code in each platform. Specifically, for example, for a high dynamic range (High Dynamic Range, HDR) photographing algorithm, different platform vendors provide self-developed HDR algorithms, and code of the self-developed HDR algorithm may be transplanted to the manufacturer framework layer.

In this way, the manufacturer framework layer can establish a communication connection between the SoC of each platform and the image processing chip.

The platforms may specifically include various types of SoC development platforms.

The application framework layer may be an application framework layer in an Android system framework. For example, the application framework layer may be a Google framework layer (Google Framework). It may be understood that the application framework layer may establish a communication connection between the manufacturer framework layer and the application layer.

It should be noted that, that the manufacturer framework layer performs communication control on the image processing chip may refer to control logic of the image processing chip or data transmission control of an input/output (Input/Output, I/O) channel.

The manufacturer framework layer is linked to the application framework layer on a data path in an Android interface definition language (Android Interface Definition Language, AIDL) manner, and a general interface is defined for a camera module, to correspondingly configure streams (configure streams), process capture requests (process capture request), and the like. The manufacturer framework layer may establish a transition mechanism for an image data stream and metadata (metadata) in this layer, to forward an image data stream transmitted from the hardware abstraction layer to the application framework layer.

In this embodiment of this application, the manufacturer framework layer is added to the Android framework system, where the manufacturer framework layer is communicatively connected to the hardware abstraction layer and the application framework layer, so that some functional modules of the hardware abstraction layer can be moved up to the manufacturer framework layer, and therefore, the functional modules that are moved up can be independently invoked by the application framework layer, do not need to be bound to a camera hardware abstraction module, do not rely on development of the camera hardware abstraction module, and after decoupling, chip upgrade can be independently performed, and can be quickly adapted when a new platform is introduced. Therefore, a problem that use experience of using different electronic device models differs significantly is resolved. Therefore, experience of using different electronic device models by a user is unified, instead of causing a memory occupation difference and a power consumption difference that are caused by a processing solution difference due to a platform difference. In addition, when the image processing chip is developed across platforms, logic interaction code between the image processing chip and the manufacturer framework layer only needs to be written once. Hardware abstraction layers of different platforms may control the image processing chip based on the manufacturer framework layer, thereby improving efficiency of developing the image processing chip across platforms.

Optionally, the manufacturer framework layer includes a first camera service module and a display hardware composer;
the first camera service module is configured to perform communication control on the image processing chip by using the hardware abstraction layer; and
the display hardware composer is configured to transmit a preview image stream to the image processing chip under control of the application framework layer.

The first camera service module may be a vendor camera service module (Vendor Camera Server). The display hardware composer may be a hardware composition abstraction layer (HWComposer, HWC).

In this embodiment of this application, a communication control path is formed between the first camera service module of the manufacturer framework layer, the hardware abstraction layer, and the image processing chip, so that an image data stream is output from an image sensor and then input into the first camera service module through the hardware abstraction layer, or a data stream is output from the image processing chip and then input into the first camera service module through the hardware abstraction layer.

In this embodiment of this application, the preview image stream may be image data that is to be sent to a display screen for display in an image photographing process performed by the electronic device. When a camera preview service is required by an application program at the application layer, the preview image stream is delivered to the display hardware composer through the application framework layer, and the preview image stream is transmitted to the image processing chip through the display hardware composer, so that the preview image stream is transmitted to a display device through the image processing chip for preview display.

In this implementation, the manufacturer framework layer includes the first camera service module and the display hardware composer. In this way, on one hand, communication control can be performed on the image processing chip based on the manufacturer framework layer by using the hardware abstraction layer, and on the other hand, the preview image stream can be further transmitted to the image processing chip based on the manufacturer framework layer. Communication control between the image sensor and both the image processing chip and the manufacturer framework layer is implemented, and a preview requirement of an upper-layer application program is transmitted to the image processing chip through the manufacturer framework layer.

Referring to FIG. 1, the image processing system may further include an image sensor, a hardware layer, and a kernel layer. The kernel layer includes a video device driver (video for linux 2, V4L2), the hardware layer includes a port CSIO of the image sensor, and the port CSIO of the image sensor is connected to the camera hardware abstraction module by using the V4L2. The image sensor may transfer an image data stream collected by the image sensor to the camera hardware abstraction module sequentially through the ports CSIO and V4L2. After receiving the image, the camera hardware abstraction module may transfer the image data stream to the manufacturer framework layer, and the manufacturer framework layer may transfer the received image data stream to the image processing chip, so that the image processing chip performs image processing on the image. In addition, the manufacturer framework layer may further transmit the image data stream received from the image processing chip to the application framework layer, so that the image is displayed or stored based on the application framework layer.

Optionally, the hardware abstraction layer includes a camera hardware abstraction module, and the first camera service module is connected to the image processing chip by using the display hardware composer, to form a first data transmission path.

Optionally, the image processing chip is connected to the first camera service module by using the camera hardware abstraction module, to form a second data transmission path.

The camera hardware abstraction module may be a camera hardware abstraction layer (Camera Hardware Abstraction Layer, Camera HAL).

Referring to FIG. 1, the kernel layer further includes a display direct rendering manager driver (Direct Rendering Manager Driver, DRM Driver), and the first camera service module is sequentially connected to a port DSI1 of the image processing chip by using the display hardware composer and the DRM driver, to form the first data transmission path. The image processing chip is sequentially connected to the first camera service module by using the port CSI1 of the image sensor, the V4L2 of the kernel layer, and the Camera Hal, to form the second data transmission path.

In this implementation, through forming of the first data transmission path, the first camera service module may transmit a to-be-processed image data stream to the image processing chip through the first data transmission path for image processing. Correspondingly, through forming of the second data transmission path, the image processing chip may transmit processed image processing back to the first camera service module through the second data transmission path.

Optionally, the system further includes a display screen, a memory, and an application layer.

Optionally, the application framework layer includes a second camera service module, a display framework module, and a media codec.

The second camera service module may be a Google camera server (Google Camera Server). The display frame module may be a Surface Flinger, and the Surface Flinger service runs in a system process of the Android framework, and is responsible for managing a frame buffer (Frame Buffer) of the Android system. The media codec may be a media codec (Media Codec).

Optionally, the first camera service module is sequentially connected to the display screen by using the second camera service module, the application layer, the display frame module, the display hardware composer, and the image processing chip, to form a third data transmission path.

In this embodiment of this application, referring to FIG. 1, the first camera service module is sequentially connected to the display screen by using the second camera service module, the application layer, the display frame module, the display hardware composer, the DRM driver, the image processing chip, and a display processing unit (Display Processing Unit, DPU), to form the third data transmission path.

In this implementation, through forming of the third data transmission path, the first camera service module transmits a processed image to the display screen through the third data transmission path for preview display.

Optionally, the first camera service module is sequentially connected to the memory by using the second camera service module and the media codec, to form a fourth data transmission path.

In the embodiments of this application, referring to FIG. 1, the first camera service module is sequentially connected to a memory interface (UFS/sMMC) by using the second camera service module, the media codec, an open media acceleration module (Open Media Acceleration, OMX), and a data block drive module (Block Driver), to form the fourth data transmission path.

In this implementation, through forming of the fourth data transmission path, the first camera service module transmits the processed image to the memory through the fourth data transmission path for storage.

Optionally, the image processing system further includes an application layer, the application framework layer includes a display enhancement service module, the manufacturer framework layer further includes an image processing chip hardware abstraction module, and the application layer is sequentially connected to the image processing chip by using the display enhancement service module and the image processing chip hardware abstraction module, to form a first control path.

In this embodiment, the display enhancement service module may be a display enhanced service (Display Enhanced Service) of a Google framework layer, and the image processing chip hardware abstraction module may be an application specific integrated circuit hardware abstraction layer (Application Specific Integrated Circuit Hardware Abstraction Layer, ASIC HAL).

Referring to FIG. 1, the application layer is sequentially connected to an SPI of the image processing chip by using the display enhancement service module, the image processing chip hardware abstraction module, and a serial peripheral interface driver (Serial Peripheral Interface Driver, SPI Driver), to form the first control path.

Specifically, the first control path may make it convenient for the user to control a state of the image processing chip based on a corresponding control in a user interface. For example, when the electronic device displays a specific interface, a display enhancement switch may be disposed in the display interface, so that the user can turn on or off the display enhancement switch based on a requirement, and therefore the user can improve picture quality of the displayed interface. The specific interface may specifically refer to a game interface, a photographing preview interface, or the like.

It may be understood that, when a display enhancement function of the image processing chip is enabled, the first camera service module may first transmit, to the image processing chip through the first data transmission path for display enhancement, an image that needs to be transmitted to the display screen for display, and then the image processing chip transmits, to the first camera service module through the second data transmission path, an image that has been enhanced for display. Then, the first camera service module transmits, based on the third data transmission path, the image that has been enhanced for display to the display screen for display.

In this implementation, through forming of the first control path, the user controls a state of the image processing chip by using a control in the user interface.

Optionally, the manufacturer framework layer further includes an image processing chip hardware abstraction module, and the first camera service module is connected to the image processing chip by using the image processing chip hardware abstraction module, to form a second control path.

Referring to FIG. 1, the first camera service module may be sequentially connected to an SPI of the image processing chip by using the image processing chip hardware abstraction module and an SPI driver, to form the second control path.

In this implementation, through forming of the second control path, the first camera service module controls a state of the image processing chip through the second control path.

In this embodiment of this application, when the image processing chip is in a display enhancement mode, the image processing chip is notified, by using the first control path and the second control path, to enhance color of the preview image stream.

In this embodiment of this application, when video recording ends, the image processing chip is notified, by using the first control path and the second control path, to end running, thereby reducing running power consumption of the electronic device.

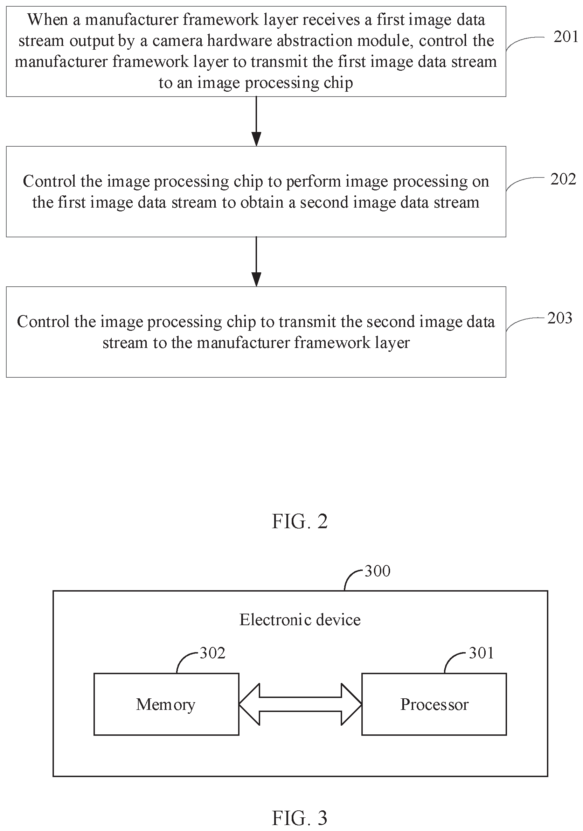

Referring to FIG. 2, FIG. 2 is a schematic flowchart of an image processing method according to an embodiment of this application. The image processing method is applied to the image processing system in the foregoing embodiment. The method includes the following steps:
Step 201: When a manufacturer framework layer receives a first image data stream output by a camera hardware abstraction module, control the manufacturer framework layer to transmit the first image data stream to an image processing chip.
Step 202: Control the image processing chip to perform image processing on the first image data stream to obtain a second image data stream,
Step 203: Control the image processing chip to transmit the second image data stream to the manufacturer framework layer.

That the image processing chip performs image processing on the first image data stream may be specifically: performing image processing on the first image data stream by using a common image processing means in related technologies. For example, the following processing may be performed on the first image data stream: denoising processing, definition adjustment processing, white balance processing, and the like.

In this embodiment of this application, an image sensor transmits the collected first image data stream to a hardware abstraction module through a kernel layer, then transmits the first image data stream to the manufacturer framework layer by using the hardware abstraction module, and then controls the manufacturer framework layer to transmit the first image data stream to the image processing chip through the kernel layer. The image sensor controls the image processing chip to perform image processing on the first image data stream to obtain a second image data stream, and then controls the image processing chip to transmit the second image data stream to the manufacturer framework layer through the kernel layer and the hardware abstraction layer.

In this embodiment of this application, the manufacturer framework layer may be controlled to implement output data of the image sensor and input/output control of the image processing chip, and control logic and a data path of the image processing chip may be controlled by the manufacturer framework layer. In this implementation, the image processing method provided in this embodiment is an image processing method corresponding to the foregoing image processing system. Therefore, the image processing method has all beneficial effects of the foregoing image processing system.

Optionally, the manufacturer framework layer includes a first camera service module and a display hardware composer, and the first camera service module is connected to the image processing chip by using the display hardware composer, to form a first data transmission path;
the controlling the manufacturer framework layer to transmit the first image data stream to the image processing chip includes:
controlling the first camera service module in the manufacturer framework layer to transmit the first image data stream to the image processing chip through the first data transmission path.

In this implementation, through forming of the first data transmission path, the first camera service module may transmit the first image data stream to the image processing chip through the first data transmission path for image processing.

In this embodiment of this application, with reference to FIG. 1, the first image data stream may be image data collected by the image sensor, and the image sensor may sequentially transfer the first image data stream to a Camera Hal through ports CSIO and V4L2. The Camera Hal may transmit the first image data stream to the manufacturer framework layer after receiving the first image data stream. The manufacturer framework layer transmits the first image data stream to the image processing chip by using a DMR driver and a DSH.

Optionally, the image processing chip is connected to the first camera service module by using the camera hardware abstraction module, to form a second data transmission path;
the controlling the image processing chip to transmit the second image data stream to the manufacturer framework layer includes:
controlling the image processing chip to transmit the second image data stream to the first camera service module in the manufacturer framework layer through the second data transmission path.

Correspondingly, through forming of the second data transmission path, the image processing chip may transmit the second image data stream back to the first camera service module through the second data transmission path. Specifically, the image processing chip outputs the second image data stream to a vendor camera server of the manufacturer framework layer through CSI1, V4L2, and a camera HAL.

Optionally, the system further includes a display screen, a memory, and an application layer, and the application framework layer includes a second camera service module, a display framework module, and a media codec.

Optionally, the first camera service module is sequentially connected to the display screen by using the second camera service module, the application layer, the display frame module, the display hardware composer, and the image processing chip, to form a third data transmission path; and
after the controlling the image processing chip to transmit the second image data stream to the manufacturer framework layer, the method further includes:
controlling the first camera service module to transmit the second image data stream to the display screen through the third data transmission path for preview display.

In this implementation, the first camera service module is controlled to transmit the second image data stream to the display screen based on the third data transmission path for preview display. Specifically, after being output by the first camera service module of the manufacturer framework layer, the second image data stream passes through the second camera service module of the application frame layer, and then is input to a display frame module of the hardware frame layer by using the application layer, and then is output to the display hardware composer of the manufacturer framework layer. After passing through a display direct rendering manager driver and DSIO of the kernel layer, the second image data stream is input to the image processing chip, passes through a display processor, and is input to the display screen for display, thereby implementing preview display of the image data stream.

Optionally, the first camera service module is sequentially connected to the memory by using the second camera service module and the media codec, to form a fourth data transmission path; and
after the controlling the image processing chip to transmit the second image data stream to the manufacturer framework layer, the method further includes:
controlling the first camera service module to transmit the second image data stream to the memory through the fourth data transmission path for storage.

In this implementation, the first camera service module may further be controlled to transmit the second image data stream to the memory based on the fourth data transmission path for storage. Specifically, after the second image data stream is output by the first camera service module in the manufacturer framework layer, the second image data stream passes through the second camera service module in the application framework layer, and after the second image data stream passes through a media decoder in the application framework layer, an open media acceleration module in the hardware abstraction layer, and a data block driver in a kernel layer, the second image data stream is output to the memory through a UFS/sMMC for storage. In this way, photographing or video recording storage of an image data stream is simultaneously implemented.

Optionally, the system further includes an application layer, the application framework layer includes a display enhancement service module, and the manufacturer framework layer further includes an image processing chip hardware abstraction module;
the application layer is sequentially connected to the image processing chip by using the display enhancement service module and the image processing chip hardware abstraction module, to form a first control path; and
the method further includes:
   when a first input is received, controlling the application layer to send a first control instruction to the image processing chip through the first control path, where the first control instruction is used to control the image processing chip to perform image enhancement processing on an image data stream.

Specifically, when the electronic device displays a specific interface, a display enhancement switch may be disposed in the display interface, so that the user can turn on or off the display enhancement switch based on a requirement, and therefore, the user can improve picture quality of the displayed interface. The first input may be an input that the user turns on the display enhancement switch in the display interface, and the first input may also be a voice input of the user. The specific interface may be a game interface, a photographing interface, or the like.

It may be understood that, the first camera service module may first transmit, to the image processing chip through the first data transmission path for display enhancement, an image that needs to be transmitted to the display screen for display, and then the image processing chip transmits, to the first camera service module through the second data transmission path, an image data stream that has been enhanced for display. Then, the first camera service module transmits, based on the third data transmission path, the image that has been enhanced for display to the display screen for display.

In this implementation, through forming of the first control path, the user controls a state of the image processing chip by using the user interface displayed by the electronic device.

Optionally, the manufacturer framework layer further includes a first camera service module and an image processing chip hardware abstraction module, and the first camera service module is connected to the image processing chip by using the image processing chip hardware abstraction module, to form a second control path; and
the method further includes:
when the system is in a video recording data stream processing state and receives a video recording end input, controlling the first camera service module to send a second control instruction to the image processing chip through the second control path, where the second control instruction is used to control the image processing chip to end video recording data stream processing.

It may be understood that when receiving an enabling input for enabling a video recording function, the electronic device may send a third control instruction to the image processing chip based on the second image data stream processing unit through the second control path, where the third control instruction is used to control to enable the image processing chip.

Control logic for triggering the second control instruction and the third control instruction may be pre-configured in the first camera service module.

The video recording end input and the enabling input for the recording function may be input by the user in an application interface displayed on the electronic device.

In this implementation, because video recording data is generally of relatively high quality for an image, when the user starts video recording, the image processing chip may be controlled to be enabled based on the third control instruction, so that image enhancement is performed on a video recording data stream based on the image processing chip, thereby improving video recording quality. Correspondingly, when the electronic device displays only a preview image and does not need to perform video recording, the image processing chip may not be enabled, to reduce power consumption of the electronic device.

As shown in FIG. 3, an embodiment of this application further provides an electronic device 300, including a processor 301, a memory 302, and a program or instructions stored in the memory 302 and capable of running on the processor 301. When the program or the instructions are executed by the processor 301, the processes of the foregoing embodiment of the image processing method are implemented, and a same technical effect can be achieved. To avoid repetition, details are not described herein again.

It should be noted that an interface display apparatus in this embodiment of this application includes the foregoing mobile electronic device and the foregoing non-mobile electronic device.

It should be understood that the processor involved in this application may include a general purpose processor, a dedicated processor, and the like. For example, the processor includes a central processing unit (Central Processing Unit, CPU), a microprocessor, a digital signal processor (Digital Signal Processor, DSP), an artificial intelligent (Artificial Intelligent, AI) processor, a graphics processing unit (Graphics Processing Unit, GPU), an application specific integrated circuit (Application Specific Integrated Circuit, ASIC) network processor (Network Processor, NP), a field programmable gate array (Field Programmable Gate Array, FPGA), or another programmable logic device, a gate circuit, a transistor, or a discrete hardware component.

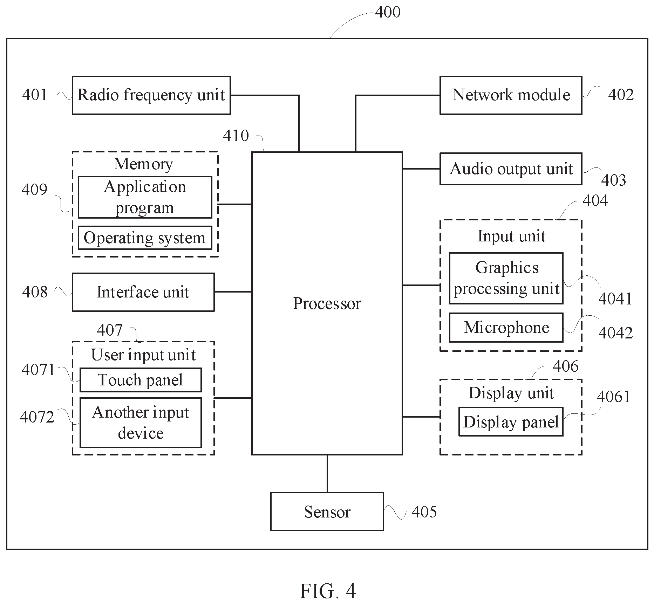

FIG. 4 is a schematic diagram of a hardware structure of an electronic device according to an embodiment of this application.

The electronic device 400 includes but is not limited to components such as a radio frequency unit 401, a network module 402, an audio output unit 403, an input unit 404, a sensor 405, a display unit 406, a user input unit 407, an interface unit 408, a memory 409, and a processor 410.

The processor 410 is configured to: when a manufacturer framework layer receives a first image data stream output by a camera hardware abstraction module, control the manufacturer framework layer to transmit the first image data stream to an image processing chip;
control the image processing chip to perform image processing on the first image data stream to obtain a second image data stream; and
control the image processing chip to transmit the second image data stream to the manufacturer framework layer.

Optionally, the manufacturer framework layer includes a first camera service module and a display hardware composer, and the first camera service module is connected to the image processing chip by using the display hardware composer, to form a first data transmission path.

Optionally, the image processing chip is connected to the first camera service module by using the camera hardware abstraction module, to form a second data transmission path;

Optionally, the processor 410 is specifically configured to control the first camera service module in the manufacturer framework layer to transmit the first image data stream to the image processing chip through the first data transmission path.

Optionally, the processor 410 is specifically configured to control the image processing chip to transmit the second image data stream to the first camera service module in the manufacturer framework layer through the second data transmission path.

Optionally, the apparatus further includes a display unit 406, a memory 409, and an application layer, where the application framework layer includes a second camera service module, a display framework module, and a media codec.

Optionally, the first camera service module is sequentially connected to the display unit 406 by using the second camera service module, the application layer, the display frame module, the display hardware composer, and the image processing chip, to form a third data transmission path.

Optionally, the first camera service module is sequentially connected to the memory 409 by using the second camera service module and the media codec, to form a fourth data transmission path.

Optionally, the processor 410 is further configured to control the first camera service module to transmit the second image data stream to the display unit 406 for preview display through the third data transmission path.

Optionally, the processor 410 is further configured to control the first camera service module to transmit the second image data stream to the memory 409 for storage through the fourth data transmission path.

Optionally, the electronic device further includes an application layer, the application framework layer includes a display enhancement service module, and the manufacturer framework layer further includes an image processing chip hardware abstraction module.

Optionally, the application layer is sequentially connected to the image processing chip by using the display enhancement service module and the image processing chip hardware abstraction module, to form a first control path.

Optionally, the processor 410 is further configured to: when a first input is received, control the application layer to send a first control instruction to the image processing chip through the first control path, where the first control instruction is used to control the image processing chip to perform image enhancement processing on an image data stream.

Optionally, the manufacturer framework layer further includes a first camera service module and an image processing chip hardware abstraction module.

Optionally, the first camera service module is connected to the image processing chip by using the image processing chip hardware abstraction module, to form a second control path.

Optionally, the processor 410 is further configured to: when the system is in a video recording data stream processing state and receives a video recording end input, control the first camera service module to send a second control instruction to the image processing chip through the second control path, where the second control instruction is used to control the image processing chip to end video recording data stream processing.

A person skilled in the art can understand that the electronic device 400 may further include the power supply (for example, a battery) that supplies power to each component. The power supply may be logically connected to the processor 410 by using a power supply management system, so as to manage functions such as charging, discharging, and power consumption by using the power supply management system. The structure of the electronic device shown in FIG. 4 does not constitute a limitation on the electronic device, and the electronic device may include more or fewer components than those shown in the figure, or combine some components, or have different component arrangements. Details are not described herein again.

It should be understood that in this embodiment of this application, the input unit 404 may include a graphics processing unit (Graphics Processing Unit, GPU) 4041 and a microphone 4042. The graphics processing unit 4041 processes image data of a static picture or a video obtained by an image capture apparatus (for example, a camera) in a video capture mode or an image capture mode. The display unit 406 may include a display panel 4061, and the display panel 4061 may be configured in a form of a liquid crystal display, an organic light-emitting diode, or the like. The user input unit 407 includes at least one of a touch panel 4071 and another input device 4072. The touch panel 4071 is also referred to as a touchscreen. The touch panel 4071 may include two parts: a touch detection apparatus and a touch controller. The another input device 4072 may include but is not limited to a physical keyboard, a functional button (such as a volume control button or a power on/off button), a trackball, a mouse, and a joystick. Details are not described herein again.

The memory 409 may be configured to store a software program and various data. The memory 409 may mainly include a first storage area for storing a program or an instruction and a second storage area for storing data. The first storage area may store an operating system, and an application or an instruction required by at least one function (for example, a sound playing function or an image playing function). In addition, the memory 409 may be a volatile memory or a non-volatile memory, or the memory 409 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 409 in this embodiment of this application includes but is not limited to these memories and any memory of another proper type.

The processor 410 may include one or more processing units. Optionally, an application processor and a modem processor are integrated into the processor 410. The application processor mainly processes an operating system, a user interface, an application, or the like. The modem processor mainly processes a wireless communication signal, for example, a baseband processor. It may be understood that, alternatively, the modem processor may not be integrated into the processor 410.

An embodiment of this application further provides a readable storage medium. The readable storage medium stores a program or an instruction, and the program or the instruction is executed by a processor to implement the processes of the foregoing embodiment of the image processing method, and a same technical effect can be achieved. To avoid repetition, details are not described herein again.

The processor is a processor in the electronic device in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or an instruction to implement the processes of the foregoing embodiment of the image processing method, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The program product is stored in a storage medium, and the program product is executed by at least one processor to implement the processes of the foregoing embodiment of the image processing method, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or a contributing part may be implemented in a form of a computer software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. An image processing system, wherein the system comprises:
an image processing chip and a hardware abstraction layer, wherein the image processing chip is communicatively connected to the hardware abstraction layer; and
a manufacturer framework layer and an application framework layer, wherein the manufacturer framework layer is separately communicatively connected to the hardware abstraction layer and the application framework layer; and
the manufacturer framework layer is further communicatively connected to the image processing chip, and the manufacturer framework layer is configured to perform communication control on the image processing chip.

2. The system according to claim 1, wherein the manufacturer framework layer comprises a first camera service module and a display hardware composer;
the first camera service module is configured to perform communication control on the image processing chip by using the hardware abstraction layer; and
the display hardware composer is configured to transmit a preview image stream to the image processing chip under control of the application framework layer.

3. The system according to claim 2, wherein the hardware abstraction layer comprises a camera hardware abstraction module, and the first camera service module is connected to the image processing chip by using the display hardware composer, to form a first data transmission path; and
the image processing chip is connected to the first camera service module by using the camera hardware abstraction module, to form a second data transmission path.

4. The system according to claim 3, further comprising a display screen, a memory, and an application layer;
the application framework layer comprises a second camera service module, a display framework module, and a media codec;
the first camera service module is sequentially connected to the display screen by using the second camera service module, the application layer, the display frame module, the display hardware composer, and the image processing chip, to form a third data transmission path; and
the first camera service module is sequentially connected to the memory by using the second camera service module and the media codec, to form a fourth data transmission path.

5. The system according to any one of claims 2 to 4, further comprising an application layer, wherein the application framework layer comprises a display enhancement service module, the manufacturer framework layer further comprises an image processing chip hardware abstraction module, and the application layer is sequentially connected to the image processing chip by using the display enhancement service module and the image processing chip hardware abstraction module, to form a first control path.

6. The system according to any one of claims 2 to 5, wherein the manufacturer framework layer further comprises an image processing chip hardware abstraction module, and the first camera service module is connected to the image processing chip by using the image processing chip hardware abstraction module, to form a second control path.

7. An image processing method, wherein the method is applied to the image processing system according to any one of claims 1 to 6, and the method comprises:
when a manufacturer framework layer receives a first image data stream output by a camera hardware abstraction module, controlling the manufacturer framework layer to transmit the first image data stream to the image processing chip;
controlling the image processing chip to perform image processing on the first image data stream to obtain a second image data stream; and
controlling the image processing chip to transmit the second image data stream to the manufacturer framework layer.

8. The method according to claim 7, wherein the manufacturer framework layer comprises a first camera service module and a display hardware composer, the first camera service module is connected to the image processing chip by using the display hardware composer, to form a first data transmission path;
the image processing chip is connected to the first camera service module by using the camera hardware abstraction module, to form a second data transmission path;
the controlling the manufacturer framework layer to transmit the first image data stream to the image processing chip comprises:
controlling the first camera service module in the manufacturer framework layer to transmit the first image data stream to the image processing chip through the first data transmission path; and
the controlling the image processing chip to transmit the second image data stream to the manufacturer framework layer comprises:
controlling the image processing chip to transmit the second image data stream to the first camera service module in the manufacturer framework layer through the second data transmission path.

9. The method according to claim 8, wherein the system further comprises a display screen, a memory, and an application layer, the application framework layer comprises a second camera service module, a display framework module, and a media codec;
the first camera service module is sequentially connected to the display screen by using the second camera service module, the application layer, the display framework module, the display hardware composer, and the image processing chip, to form a third data transmission path;
the first camera service module is sequentially connected to the memory by using the second camera service module and the media codec, to form a fourth data transmission path; and
after the controlling the image processing chip to transmit the second image data stream to the manufacturer framework layer, the method further comprises:
controlling the first camera service module to transmit the second image data to the display screen through the third data transmission path for preview display, or controlling the first camera service module to transmit the second image data stream to the memory through the fourth data transmission path for storage.

10. The method according to any one of claims 7 to 9, wherein the system further comprises an application layer, the application framework layer comprises a display enhancement service module, and the manufacturer framework layer further comprises an image processing chip hardware abstraction module;
the application layer is sequentially connected to the image processing chip by using the display enhancement service module and the image processing chip hardware abstraction module, to form a first control path; and
the method further comprises:
when a first input is received, controlling the application layer to send a first control instruction to the image processing chip through the first control path, wherein the first control instruction is used to control the image processing chip to perform image enhancement processing on an image data stream.

11. The method according to any one of claims 7 to 10, wherein the manufacturer framework layer further comprises a first camera service module and an image processing chip hardware abstraction module;
the first camera service module is connected to the image processing chip by using the image processing chip hardware abstraction module, to form a second control path; and
the method further comprises:
when the system is in a video recording data stream processing state and receives a video recording end input, controlling the first camera service module to send a second control instruction to the image processing chip through the second control path, wherein the second control instruction is used to control the image processing chip to end video recording data stream processing.

12. An electronic device, comprising a processor and a memory, wherein the memory stores a program or instructions capable of being run on the processor, and when the program or the instructions are executed by the processor, the steps of the image processing method according to any one of claims 7 to 11 are implemented.

13. A readable storage medium, wherein the readable storage medium stores a program or instructions, and when the program or the instructions are executed by a processor, the steps of the image processing method according to any one of claims 7 to 11 are implemented.

14. A chip, wherein the chip comprises a processor and a communication interface, wherein the communication interface is coupled to the processor, and the processor is configured to run a program or instructions to implement the steps of the image processing method according to any one of claims 7 to 11.

15. A computer program product, wherein the program product is executed by at least one processor to implement the image processing method according to any one of claims 7 to 11.

16. An image processing apparatus, wherein the apparatus is configured to perform the steps of the image processing method according to any one of claims 7 to 11.
